# EUROPEAN PATENT APPLICATION

(11) **EP 4 516 576 A1**
(43) Date of publication of application: **05.03.2025**
(21) Application number: 23194194.9
(22) Date of filing: 30.08.2023
(51) Int. Cl.: B60L 53/62, B60L 58/12, B60L 58/16, B60L 58/18, B60L 58/22, B60L 58/25, B60L 58/26, H01M 10/44, H01M 10/48, H01M 10/613, H01M 10/617, H01M 10/625, H01M 10/651, H02J 7/00

(54) **SYSTEM AND METHOD OF CONTROLLING CHARGING OF AN ENERGY STORAGE SYSTEM COMPRISING A PLURALITY OF BATTERY PACKS**

(71) Applicant: VOLVO TRUCK CORPORATION, 405 08 Göteborg (SE)
(72) Inventor: PETISME, Martin, 414 67 GÖTEBORG (SE); BALTHASAR, Michael, 413 25 GÖTEBORG (SE); SHWAN, Soran, 431 33 MÖLNDAL (SE); GAJIC, Lejla, 443 70 GRÅBO (SE)
(74) Representative: Kransell & Wennborg KB

(57) **Abstract**

A computer system (100) comprising processing circuitry (102) configured to: determine (200) a state of charge (201), SoC, of each of a plurality of battery packs (150a-c) in an energy storage system (104) of a vehicle; determine (202) a temperature (203) of each of the plurality of battery packs; determine (204) an internal resistance (205) of each of the plurality of battery packs; set (206) an initial target SoC (207) for the plurality of battery packs, each battery pack having the same initial target SoC; estimate (208) a final temperature (209) of each battery pack for the initial target SoC from a predetermined temperature model for the battery packs using the temperature and the internal resistance of the respective battery pack; determine (210) that the estimated final temperature of a battery pack exceeds a threshold temperature (211); and set (212) a reduced target SoC (213) for the battery pack estimated to exceed the threshold temperature.

## Description

### TECHNICAL FIELD

The disclosure relates generally to charging of an energy storage system. In particular aspects, the disclosure relates to a system and a method of controlling charging of an energy storage system comprising a plurality of battery packs. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In electric and hybrid vehicles comprising energy storage systems having a plurality of battery packs, the different battery packs may age differently depending both on manufacturing differences between individual battery packs and on how charging of the battery packs is performed. In some cases, deterioration of a single battery pack in an energy storage system may case the entire battery to be changed or serviced, inducing undesirable downtime of the vehicle. Accordingly, it is important to find advantageous charging schemes for improving battery lifetime.

### SUMMARY

According to a first aspect of the disclosure, it is provided a computer system comprising processing circuitry configured to: determine a state of charge, SoC, of each of a plurality of battery packs in an energy storage system of a vehicle; determine a temperature of each of the plurality of battery packs; determine an internal resistance of each of the plurality of battery packs; set an initial target SoC for the plurality of battery packs, each battery pack having the same initial target SoC; estimate a final temperature of each battery pack for the initial target SoC from a predetermined temperature model for the battery packs using the temperature and the internal resistance of the respective battery pack; determine that an estimated final temperature of a battery pack exceeds a threshold temperature; and reduce a target SoC for the battery pack estimated to exceed the threshold temperature.

The first aspect of the disclosure may seek to avoid overheating and undue wear in batteries when charging batteries comprising a plurality of battery packs. A technical benefit may include that battery packs in an energy storage system comprising a plurality of battery packs age evenly which may both improves the life length of the battery as well as reduce risks of overheating during charging.

Optionally in some examples, including in at least one preferred example, the processing circuitry is further configured to: receive an available charger capacity for charging the energy storage system; and set the initial target SoC for the plurality of battery packs based on the available charger capacity. A technical benefit may include that a target SoC can be adapted based on the properties of the charger. There may for example be limitations in a charger in the form of an external charging station which limits the possible SoC for the energy storage system. It is thereby possible to set a more accurate initial target SoC when knowing the properties and limitations of the charger.

Optionally in some examples, including in at least one preferred example, the received available charger capacity is at least one of available charging time, maximum charging power, maximum charging current, and total charging energy. A technical benefit may include that if the charger has limitations in terms of charging time, maximum charging power, maximum charging current, and total charging energy, the initial target SoC can be set so that the charger is capable of charging the energy storage to the set initial SoC.

Optionally in some examples, including in at least one preferred example, the processing circuitry is further configured to: during charging, disconnect the battery pack having the reduced target SoC from the energy storage system when the reduced target SoC is reached; and during operation of the vehicle, determine that at least one other battery pack has a SoC equal to the reduced target SoC and reconnect the battery pack having the reduced target SoC. A technical benefit may include that the battery pack which had a reduced target SoC, and which consequently was charged to a lower SoC compared to other battery packs, is not used until other battery packs are at the same SoC, which in turn evens out and balances aging and state of health, SoH, of the different battery packs.

Optionally in some examples, including in at least one preferred example, the processing circuitry is further configured to: determine cooling properties of an energy storage cooling system; and estimate a final temperature of battery pack based on the cooling properties of the energy storage system. A technical benefit may include that the expected final temperature of a battery pack during charging not only takes the properties of the battery as such into account, but also the properties of the cooling system. The cooling system may for example operate at reduced capacity, in which case the temperature for a battery pack when reaching a certain SoC could be high than expected. By taking the cooling system properties into account, a more accurate target SoC can be set from the start of a charging procedure.

Optionally in some examples, including in at least one preferred example, the processing circuitry is further configured to reduce a target SoC for a plurality of battery packs estimated to exceed the corresponding predetermined threshold temperature to a target SoC for which the final temperature of the battery packs does not exceed the predetermined threshold temperature according to the predetermined temperature model. A technical benefit may include that when it can be determined if more than one battery pack is estimated to exceed a threshold temperature, all battery packs in danger of exceeding the threshold temperature can have a reduced target SoC.

Optionally in some examples, including in at least one preferred example, the processing circuitry is further configured to: determine a threshold temperature for a battery pack based on an expected decrease in state of health for a battery pack as a function of temperature. A technical benefit may include that battery packs having a lower state of health are subjected to lower temperatures so to avoid unnecessary deterioration of the battery pack.

Optionally in some examples, including in at least one preferred example, the processing circuitry is further configured to: estimate a maximum temperature increase rate of each battery pack for reaching the initial target SoC from a predetermined temperature model for the battery packs using the temperature and the internal resistance of the respective battery pack; and determine that maximum temperature increase rate of a battery pack exceed a threshold temperature increase rate; and reduce a target SoC for the battery pack estimated to exceed the threshold temperature increase rate to a target SoC for which the battery pack does not exceed the threshold temperature increase rate according to the predetermined temperature model. A technical benefit may include that a faulty or degraded battery pack can be detected by monitoring a temperature increase rate, in which case it is possible to prevent temperature spikes by reducing the target SoC even if a final temperature was not expected to exceed a threshold temperature. Monitoring the temperature increase rate thereby provides an additional way of ensuring that battery packs are not damaged or unnecessarily degraded during charging.

Optionally in some examples, including in at least one preferred example, the processing circuitry is further configured to: in response to a reduced target SoC for a battery pack, control charging circuity to charge the battery pack to the reduced target SoC. A technical benefit may include that processing circuitry of the vehicle can communicate directly with charging circuitry which may be either arranged internally in the vehicle or externally in a charger or charging station.

According to a second aspect of the disclosure, it is provided a computer-implemented method, comprising: by processing circuitry of a computer system, determining a state of charge, SoC, of each of a plurality of battery packs in an energy storage system of a vehicle; determining a temperature of each of the plurality of battery packs; determining an internal resistance of each of the plurality of battery packs; setting an initial target SoC for the plurality of battery packs, each battery pack having the same initial target SoC; estimating a final temperature of each battery pack for the initial target SoC from a predetermined temperature model for the battery packs using the temperature and the internal resistance of the respective battery pack; determining that an estimated final temperature of a battery pack exceeds a threshold temperature; and reducing a target SoC for the battery pack estimated to exceed the threshold temperature.

The second aspect of the disclosure may seek to avoid overheating and undue wear in batteries when charging batteries comprising a plurality of battery packs. A technical benefit may include that battery packs in an energy storage system comprising a plurality of battery packs age evenly which may both improves the life length of the battery as well as reduce risks of overheating during charging.

Optionally in some examples, including in at least one preferred example, the method further comprises: receiving an available charger capacity for charging the energy storage system; and setting the initial target SoC for the plurality of battery packs based on the available charger capacity.

Optionally in some examples, including in at least one preferred example, the received available charger capacity is at least one of available charging time, maximum charging power, maximum charging current, and total charging energy.

Optionally in some examples, including in at least one preferred example the method further comprises, by the processing circuitry: during charging, disconnecting a battery pack having the reduced target SoC from the energy storage system when the reduced target SoC is reached; and during operation of the vehicle, reconnecting the battery pack having the reduced target SoC when at least one other battery pack has a SoC equal to the reduced target SoC.

Optionally in some examples, including in at least one preferred example, the method further comprises, by the processing circuitry: receiving cooling properties of an energy storage cooling system; and estimating a final temperature of battery pack based on the cooling properties of the energy storage system.

Optionally in some examples, including in at least one preferred example the method further comprises, by the processing circuitry: reducing a target SoC for the battery pack estimated to exceed the predetermined threshold temperature to a target SoC for which the final temperature of the battery pack does not exceed the predetermined threshold temperature according to the predetermined temperature model.

Optionally in some examples, including in at least one preferred example the method further comprises, by the processing circuitry: determining a threshold temperature for a battery pack based on an expected decrease in state of health for a battery pack as a function of temperature.

Optionally in some examples, including in at least one preferred example the method further comprises, by the processing circuitry: estimating a maximum temperature increase rate of each battery pack for reaching the initial target SoC using a predetermined temperature model for the battery packs, the temperature and the internal resistance of the respective battery pack; and determining that maximum temperature increase rate of a battery pack exceed a threshold temperature increase rate; and reducing a target SoC for the battery pack estimated to exceed the threshold temperature increase rate.

Optionally in some examples, including in at least one preferred example, it is provided a computer program product comprising program code for performing, when executed by the processing circuitry, the method of any of the aforementioned examples.

Optionally in some examples, including in at least one preferred example it is provided a non-transitory computer-readable storage medium comprising instructions, which when executed by the processing circuitry, cause the processing circuitry to perform the method of any of the aforementioned examples.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle comprising a computer system comprising processing circuitry according to an example.
**FIG. 2** is a flow chart of an exemplary method to control charging of battery packs according to an example.
**FIG. 3** is a flow chart of an exemplary method to control charging of battery packs according to an example.
**FIG. 4** is a flow chart of an exemplary method to control charging of battery packs according to an example.
**FIG. 5** is a flow chart of an exemplary method to control charging of battery packs according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

In an energy storage system comprising multiple battery packs, charging of the battery, and in particular charging at a high state-of-charge (SoC) may cause a sharp temperature increase which the cooling system may not be able to cool adequately. It is thus desirable to provide a system and method to mitigate this problem.

The first aspect of the disclosure may therefore seek to avoid overheating and undue wear in batteries when charging batteries comprising a plurality of battery packs. A technical benefit may include that battery packs in an energy storage system comprising a plurality of battery packs age evenly which may both improves the life length of the battery as well as reduce risks of overheating during charging.

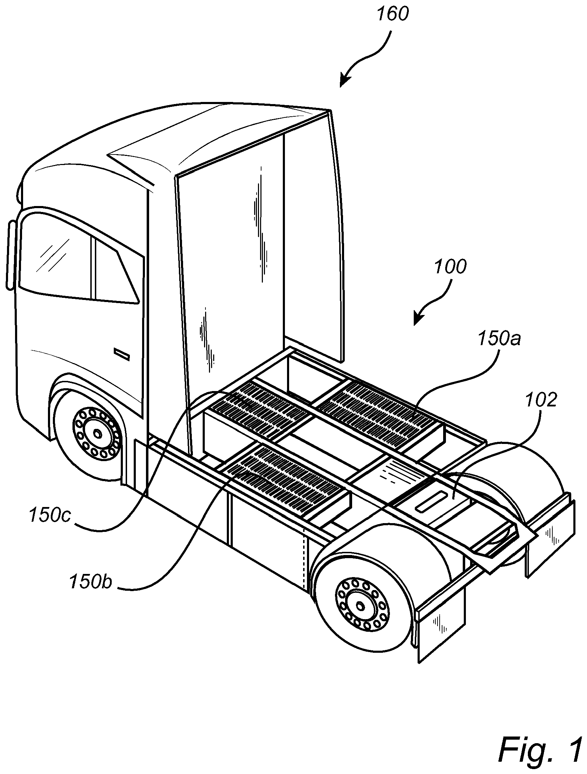

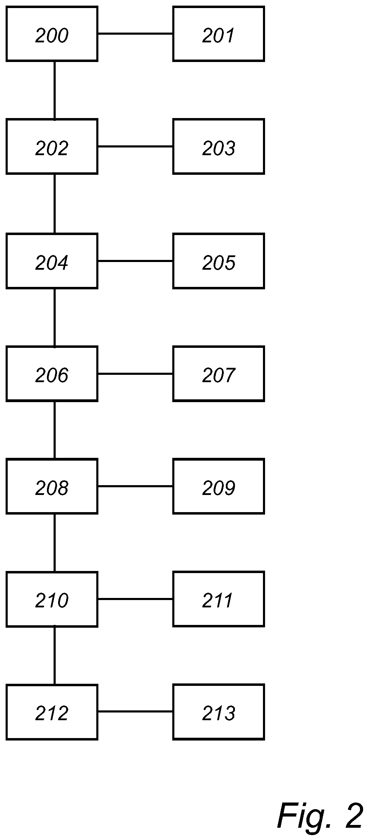

Fig. 1 schematically illustrates a vehicle 160 comprising a computer system 100 comprising processing circuitry 102 according to an example. The illustrated vehicle comprises a plurality of battery packs 150a-c connected to the processing circuitry 102. The functionality of the processing circuitry and a method for controlling the processing circuitry will be described with further reference to Fig. 2 which is a flow chart of an exemplary method to control charging of battery packs according to an example. It should be understood that the described methods include actions taken by the processing circuitry 102 in a vehicle 160.

The processing circuitry 102 is configured to: determine 200 a state of charge 201, SoC, of each of a plurality of battery packs 150a-c in an energy storage system 104 of a vehicle and to determine 202 a temperature 203 of each of the plurality of battery packs. The SoC 201 can for example be determined by measuring a voltage over each of the battery packs 150a-c using a voltage sensor, and the temperature can be determined using a temperature sensor configured to measure the temperature of the respective battery pack 150a-c. Furthermore, the method comprises determining 204 an internal resistance 205 of each of the plurality of battery packs. The internal resistance 205 gives an indication of the state-of-health of the battery and also provides information about how the battery pack can be charged, for example if certain current limitations need to be set.

Next, the method comprises setting 206 an initial target SoC 207 for the plurality of battery packs, each battery pack having the same initial target SoC 207. The initial target SoC 207 may for example be 100%, or it may be a SoC lower than 100% if there are limitations such as available time slot or if it is desirable to charge the battery to a lower SoC for other reasons such as to improve the life length of the battery.

Following the target SoC, the method comprises estimating 208 a final temperature 209 of each battery pack for the initial target SoC 207 from a predetermined temperature model for the battery packs using the temperature 203 and the internal resistance 205 of the respective battery pack 150a-c. The predetermined temperature model can be an electro-thermal model for the type of battery pack used. The predetermined temperature model may also be based on empirical data describing the temperature of the battery pack for different charging parameters. Moreover, the predetermined temperature model may also utilize a database or lookup table to estimate a final temperature 209 for a given target SoC 207.

Furthermore, when it is determined 210 that the estimated final temperature of a battery pack 150a-c exceeds a threshold temperature 211, the method comprises setting a reduced 212 target SoC 213 for the battery pack 150a-c estimated to exceed the threshold temperature 211. The threshold temperature 211 is preferably set so that it is ensured that the battery pack does not take damage or that it is subjected to undue wear and aging during the charging procedure. Moreover, the reduced target SoC 213 is preferably determined using the predetermined temperature model so that the reduced target SoC 213 does not cause the battery to rise above the threshold temperature.

If all battery packs would be set to the same SoC, there would be a risk of inhomogeneous ageing of the battery packs since there may be uneven loads of the battery packs and since the battery packs may also age differently due to small physical differences between different battery packs. The described system and method will in effect provide a periodical rotation of which of the battery packs are charged to a higher SoC, thereby introducing more even aging so that the state-of-health of the battery packs remain the same.

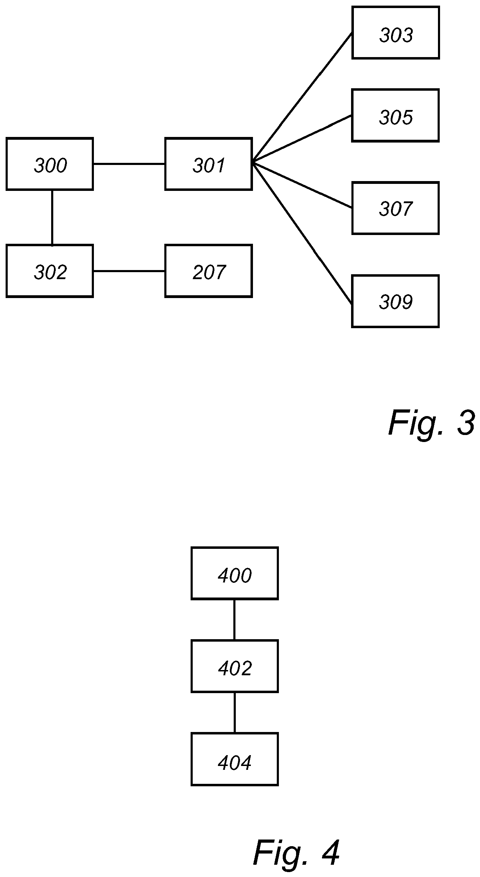

Fig. 3 is a flow chart of an exemplary method to control charging of battery packs according to an example. According to the method and system described by Fig. 3, the processing circuitry is further configured to receive 300 an available charger capacity 301 for charging the energy storage system and to set 302 the initial target SoC 207 for the plurality of battery packs based on the available charger capacity 301. Moreover, the received available charger capacity 301 may be at least one of available charging time 303, maximum charging power 305, maximum charging current 307, and total charging energy 309. Accordingly, the initial target SoC 207 can be set to correspond to the capabilities of the charger to avoid setting an unrealistic target SoC. For example, if a charger is only capable of charging at a certain power, and if the charging time is limited, the total charging cycle may not be capable of reaching a desired SoC. In such a scenario, it is preferable to set a lower initial target SoC which can be achieved by the charger. Thereby, the risk of exceeding the threshold temperature is reduced.

Fig. 4 is a flow chart of an exemplary method to control charging of battery packs according to an example. According to the method and system described by Fig. 4, the processing circuitry is further configured to during charging, disconnect 400 the battery pack having the reduced target SoC from the energy storage system when the reduced target SoC is reached, and during operation of the vehicle, determine 402 that at least one other battery pack has a SoC equal to the reduced target SoC and reconnect 404 the battery pack having the reduced target SoC. Aging of the battery packs is thereby further evened out since the battery pack or battery packs being charged to a lower SoC are not used until other battery packs have reached the same SoC, thereby attempting to ensure that the loads on the battery packs are evenly balanced.

The processing circuitry may further be configured to determine cooling properties of an energy storage cooling system and estimate a final temperature of the battery pack based on the cooling properties of the energy storage system. The temperature model may be formed using default cooling properties of the cooling system which for example may specify cooling as a function of external temperature. However, the cooling properties may have changed from default setting for example due to degradation of the cooling system or if parts of the cooling system are faulty or damaged. The temperature model can then take the reduced capabilities of the cooling system into account when determining the final temperature for a battery pack for the given SoC. Moreover, temperature spikes are most likely to occur at high SoC, so it is likely that temperature of the battery pack is increasing during the charging cycle.

The processing circuitry may further be configured to reduce a target SoC for a plurality of battery packs estimated to exceed the corresponding predetermined threshold temperature to a target SoC for which the final temperature of the battery packs does not exceed the predetermined threshold temperature according to the predetermined temperature model. The described approach is thus applicable to any number of battery packs in an energy storage system, and it is thus possible that different battery packs are set to different target SoC during a charging procedure.

The processing circuitry may further be configured to determine a threshold temperature for a battery pack based on an expected decrease in state of health for a battery pack as a function of temperature. Accordingly, the SoH may be a limiting parameter when determining to which SoC the battery pack should be charged. A certain reduction in SoH may be allowed since this is a naturally occurring phenomenon in most types of known batteries. However, it may be desirable to set a threshold on how much the SoH is allowed to degrade during a charging cycle to ensure that the life length of the batteries is maximized.

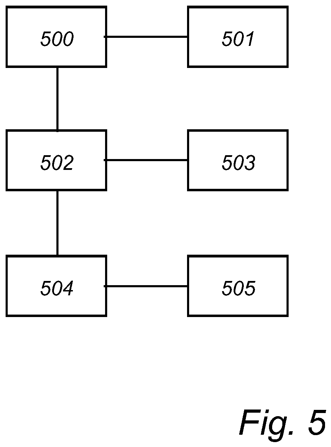

Fig. 5 is a flow chart of an exemplary method to control charging of battery packs according to an example. According to the method and system described by Fig. 4, the processing circuitry is further configured to estimate 500 a maximum temperature increase rate 501 of each battery pack for reaching the initial target SoC from a predetermined temperature model for the battery packs using the temperature and the internal resistance of the respective battery pack; and determine 502 that maximum temperature increase rate of a battery pack exceeds a threshold temperature increase rate 503, and reduce 504 a target SoC for the battery pack estimated to exceed the threshold temperature increase rate to a target SoC 505 for which the battery pack does not exceed the threshold temperature increase rate according to the predetermined temperature model. Temperature spikes in the battery pack can thereby be avoided by anticipating that a temperature spike, i.e. a rapid temperature rise, may occur and setting a SoC to prevent a too rapid temperature increase.

The processing circuitry is further configured to in response to a reduced target SoC for a battery pack, control charging circuity to charge the battery pack to the reduced target SoC.

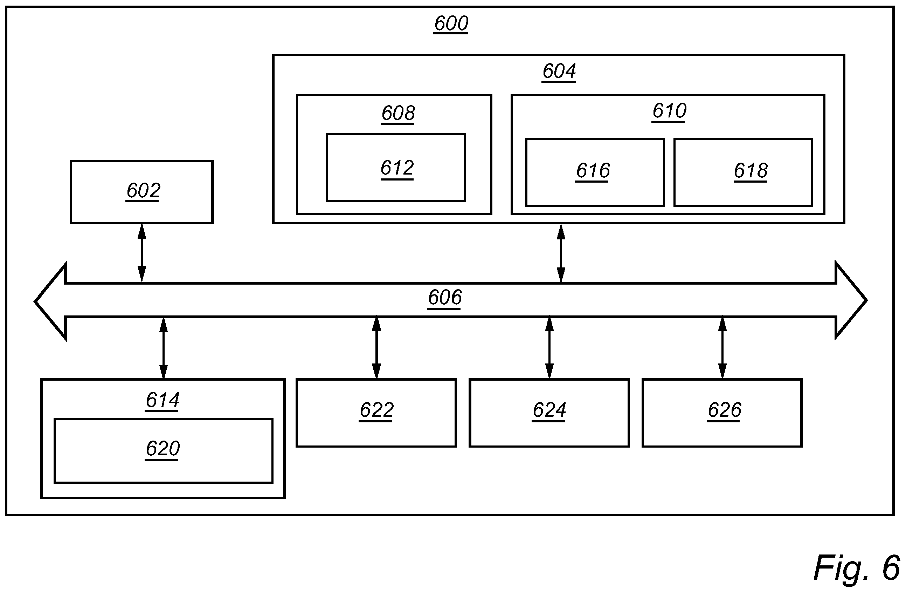

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1. A computer system (100) comprising processing circuitry (102) configured to: determine (200) a state of charge (201), SoC, of each of a plurality of battery packs (150a-c) in an energy storage system (104) of a vehicle; determine (202) a temperature (203) of each of the plurality of battery packs; determine (204) an internal resistance (205) of each of the plurality of battery packs; set (206) an initial target SoC (207) for the plurality of battery packs, each battery pack having the same initial target SoC; estimate (208) a final temperature (209) of each battery pack for the initial target SoC from a predetermined temperature model for the battery packs using the temperature and the internal resistance of the respective battery pack; determine (210) that the estimated final temperature of a battery pack exceeds a threshold temperature (211); and set a reduced (212) target SoC (213) for the battery pack estimated to exceed the threshold temperature.

Example 2. The computer system according to example 1, wherein the processing circuitry is further configured to: receive (300) an available charger capacity (301) for charging the energy storage system; and set (302) the initial target SoC for the plurality of battery packs based on the available charger capacity.

Example 3. The computer system according to example 2, wherein the received available charger capacity is at least one of available charging time (303), maximum charging power (305), maximum charging current (307), and total charging energy (309).

Example 4. The computer system according to any one of the preceding examples, wherein the processing circuitry is further configured to: during charging, disconnect (400) the battery pack having the reduced target SoC from the energy storage system when the reduced target SoC is reached; and during operation of the vehicle, determine (402) that at least one other battery pack has a SoC equal to the reduced target SoC and reconnect (404) the battery pack having the reduced target SoC.

Example 5. The computer system according to example 1, wherein the processing circuitry is further configured to: determine cooling properties of an energy storage cooling system; and estimate a final temperature of the battery pack based on the cooling properties of the energy storage system.

Example 6. The computer system according to any one of examples 1 to 5, wherein the processing circuitry is further configured to: reduce a target SoC for a plurality of battery packs estimated to exceed the corresponding predetermined threshold temperature to a target SoC for which the final temperature of the battery packs does not exceed the predetermined threshold temperature according to the predetermined temperature model.

Example 7. The computer system according to example 1, wherein the processing circuitry is further configured to: determine a threshold temperature for a battery pack based on an expected decrease in state of health for a battery pack as a function of temperature.

Example 8. The computer system according to example 1, wherein the processing circuitry is further configured to: estimate (500) a maximum temperature increase rate (501) of each battery pack for reaching the initial target SoC from a predetermined temperature model for the battery packs using the temperature and the internal resistance of the respective battery pack; and determine (502) that maximum temperature increase rate of a battery pack exceed a threshold temperature increase rate (503); and reduce (504) a target SoC for the battery pack estimated to exceed the threshold temperature increase rate to a target SoC (505) for which the battery pack does not exceed the threshold temperature increase rate according to the predetermined temperature model.

Example 9. The computer system according to any one of the preceding examples, wherein the processing circuitry is further configured to: in response to a reduced target SoC for a battery pack, control charging circuity to charge the battery pack to the reduced target SoC.

Example 10. A vehicle (160) comprising the computer system of any of examples 1-9.

Example 11. A computer-implemented method, comprising: by processing circuitry of a computer system, determining a state of charge, SoC, of each of a plurality of battery packs in an energy storage system of a vehicle; determining a temperature of each of the plurality of battery packs; determining an internal resistance of each of the plurality of battery packs; setting an initial target SoC for the plurality of battery packs, each battery pack having the same initial target SoC; estimating a final temperature of each battery pack for the initial target SoC from a predetermined temperature model for the battery packs using the temperature and the internal resistance of the respective battery pack; determining that an estimated final temperature of a battery pack exceeds a threshold temperature; and
reducing a target SoC for the battery pack estimated to exceed the threshold temperature.

Example 12. The method according to example 11, further comprising:
receiving an available charger capacity for charging the energy storage system; and
setting the initial target SoC for the plurality of battery packs based on the available charger capacity.

Example 13. The method according to example 11, wherein the received available charger capacity is at least one of available charging time, maximum charging power, maximum charging current, and total charging energy.

Example 14. The method according to any one of examples 11 to 13, further comprising, by the processing circuitry: during charging, disconnecting a battery pack having the reduced target SoC from the energy storage system when the reduced target SoC is reached; and during operation of the vehicle, reconnecting the battery pack having the reduced target SoC when at least one other battery pack has a SoC equal to the reduced target SoC.

Example 15. The method according to any one of examples 11 to 14, further comprising, by the processing circuitry: receiving cooling properties of an energy storage cooling system; and estimating a final temperature of battery pack based on the cooling properties of the energy storage system.

Example 16. The method according to any one of examples 11 to 15, further comprising, by the processing circuitry: reducing a target SoC for the battery pack estimated to exceed the predetermined threshold temperature to a target SoC for which the final temperature of the battery pack does not exceed the predetermined threshold temperature according to the predetermined temperature model.

Example 17. The method according to any one of examples 11 to 16, further comprising, by the processing circuitry: determining a threshold temperature for a battery pack based on an expected decrease in state of health for a battery pack as a function of temperature.

Example 18. The method according to any one of examples 11 to 17, further comprising, by the processing circuitry: estimating a maximum temperature increase rate of each battery pack for reaching the initial target SoC using a predetermined temperature model for the battery packs, the temperature and the internal resistance of the respective battery pack; and determining that maximum temperature increase rate of a battery pack exceed a threshold temperature increase rate; and reducing a target SoC for the battery pack estimated to exceed the threshold temperature increase rate.

Example 19. A computer program product comprising program code for performing, when executed by the processing circuitry, the method of any of examples 11 to 18.

Example 20. A non-transitory computer-readable storage medium comprising instructions, which when executed by the processing circuitry, cause the processing circuitry to perform the method of any of examples 11 to 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) comprising processing circuitry (102) configured to:
determine (200) a state of charge (201), SoC, of each of a plurality of battery packs (150a-c) in an energy storage system (104) of a vehicle;
determine (202) a temperature (203) of each of the plurality of battery packs;
determine (204) an internal resistance (205) of each of the plurality of battery packs;
set (206) an initial target SoC (207) for the plurality of battery packs, each battery pack having the same initial target SoC;
estimate (208) a final temperature (209) of each battery pack for the initial target SoC from a predetermined temperature model for the battery packs using the temperature and the internal resistance of the respective battery pack;
determine (210) that the estimated final temperature of a battery pack exceeds a threshold temperature (211); and
set (212) a reduced target SoC (213) for the battery pack estimated to exceed the threshold temperature.

2. The computer system according to claim 1, wherein the processing circuitry is further configured to:
receive (300) an available charger capacity (301) for charging the energy storage system; and
set (302) the initial target SoC for the plurality of battery packs based on the available charger capacity.

3. The computer system according to claim 2, wherein the received available charger capacity is at least one of available charging time (303), maximum charging power (305), maximum charging current (307), and total charging energy (309).

4. The computer system according to any one of the preceding claims, wherein the processing circuitry is further configured to:
during charging, disconnect (400) the battery pack having the reduced target SoC from the energy storage system when the reduced target SoC is reached; and
during operation of the vehicle, determine (402) that at least one other battery pack has a SoC equal to the reduced target SoC and reconnect (404) the battery pack having the reduced target SoC.

5. The computer system according to claim 1, wherein the processing circuitry is further configured to:
determine cooling properties of an energy storage cooling system; and
estimate a final temperature of the battery pack based on the cooling properties of the energy storage system.

6. The computer system according to any one of claims 1 to 5, wherein the processing circuitry is further configured to:
reduce a target SoC for a plurality of battery packs estimated to exceed the corresponding predetermined threshold temperature to a target SoC for which the final temperature of the battery packs does not exceed the predetermined threshold temperature according to the predetermined temperature model.

7. The computer system according to claim 1, wherein the processing circuitry is further configured to:
determine a threshold temperature for a battery pack based on an expected decrease in state of health for a battery pack as a function of temperature.

8. The computer system according to claim 1, wherein the processing circuitry is further configured to:
estimate (500) a maximum temperature increase rate (501) of each battery pack for reaching the initial target SoC from a predetermined temperature model for the battery packs using the temperature and the internal resistance of the respective battery pack; and
determine (502) that maximum temperature increase rate of a battery pack exceed a threshold temperature increase rate (503); and
reduce (504) a target SoC for the battery pack estimated to exceed the threshold temperature increase rate to a target SoC (505) for which the battery pack does not exceed the threshold temperature increase rate according to the predetermined temperature model.

9. The computer system according to any one of the preceding claims, wherein the processing circuitry is further configured to:
in response to a reduced target SoC for a battery pack, control charging circuity to charge the battery pack to the reduced target SoC.

10. A vehicle (160) comprising the computer system of any of claims 1-9.

11. A computer-implemented method, comprising:
by processing circuitry of a computer system,
determining a state of charge, SoC, of each of a plurality of battery packs in an energy storage system of a vehicle;
determining a temperature of each of the plurality of battery packs;
determining an internal resistance of each of the plurality of battery packs;
setting an initial target SoC for the plurality of battery packs, each battery pack having the same initial target SoC;
estimating a final temperature of each battery pack for the initial target SoC from a predetermined temperature model for the battery packs using the temperature and the internal resistance of the respective battery pack;
determining that an estimated final temperature of a battery pack exceeds a threshold temperature; and
reducing a target SoC for the battery pack estimated to exceed the threshold temperature.

12. The method according to claim 11, further comprising:
receiving an available charger capacity for charging the energy storage system; and
setting the initial target SoC for the plurality of battery packs based on the available charger capacity.

13. The method according to claim 11, wherein the received available charger capacity is at least one of available charging time, maximum charging power, maximum charging current, and total charging energy.

14. A computer program product comprising program code for performing, when executed by the processing circuitry, the method of any of claims 11 to 13.

15. A non-transitory computer-readable storage medium comprising instructions, which when executed by the processing circuitry, cause the processing circuitry to perform the method of any of claims 11 to 13.
